# EUROPÄISCHE PATENTSCHRIFT

(11) **EP 1 598 812 B1**
(45) Veröffentlichungstag und Bekanntmachung des Hinweises auf die Patenterteilung: **09.07.2008**
(21) Anmeldenummer: 05010041.1
(22) Anmeldetag: 09.05.2005
(51) Int. Cl.: G10L 21/02, H04B 1/10, H03G 3/34

(54) **Vorrichtung und Verfahren zur Rauschunterdrückung**
Device and method for suppressing noise
Dispositif et procédé de débruitage

(30) Priorität: 19.05.2004 DE 102004025300
(43) Veröffentlichungstag der Anmeldung: 23.11.2005
(73) Patentinhaber: Micronas GmbH, 79108 Freiburg (DE)
(72) Erfinder: Van der Burgt, Chiron, J521 GK Enschede (NL); Fiesel, Hans, 79194 Gundelfingen (DE)
(74) Vertreter: Patentanwälte Westphal, Mussgnug & Partner

(56) Entgegenhaltungen:
- EP-A- 0 208 082
- US-A- 4 228 545
- US-A- 4 323 730
- US-A- 4 494 551

## Beschreibung

Die Erfindung betrifft eine Rauschunterdrückungsvorrichtung mit den Merkmalen des Oberbegriffs des Anspruchs1. Weiterhin betrifft die Erfindung ein Verfahren zur Rauschunterdrückung gemäß dem Oberbegriff des Patentanspruchs 5.

Eine solche Rauschunterdrückungsvorrichtung und ein solches Verfahren sind z.B. aus der EP 0 208 082 A2 bekannt.

Es ist bekannt, zur Rauschunterdrückung in einem Signal, einen analogen Rauschdetektor mit analoger Logikeinheit zur Kontrolle der detektierten Signale vorzusehen. Die Realisierung einer analogen Logikeinheit ist äußerst aufwendig.

Daher wurde dazu übergegangen, die Detektion von Signalfehlern in den digitalen Bereich, also nach Umwandlung eines analogen Signals in ein digitales Signal, zu verlegen. Die Rauschdetektion erfolgt hierbei mittels eines digitalen Detektors. Der Nachteil hierbei besteht darin, dass Fehler oberhalb der Full-Scale-Range des Analog/Digitalwandlers nicht detektiert werden können.

Der Erfindung liegt die Aufgabe zu Grunde, eine Vorrichtung und ein Verfahren vorzuschlagen, mit denen die Detektion von Signalfehlern in einem großen Bereich möglich ist und die andererseits einfach zu implementieren sind.

Die der Erfindung zugrunde liegende Aufgabe wird durch ein Vorrichtung mit den Merkmalen des Anspruchs 1 und eines Verfahren mit den Merkmalen des Anspruchs 5 gelöst.

Weiterbildungen sind Gegenstand der Unteransprüche.

Die erfindungsgemäße Vorrichtung und das erfindungsgemäße Verfahren eignen sich insbesondere für den Einsatz in Audio und/oder Videosystemen in Kraftfahrzeugen zur Beseitigung von durch die Motorzündung verursachten, wiederkehrenden Signalstörungen. Zur Überprüfung, ob es sich bei den detektierten Signalabschnitten tatsächlich um Signalfehler handelt, ist dem analogen Rauschdetektor eine digitale Logikeinheit nachgeschaltet, die nach einem bestimmten Algorithmus arbeitet. Die Detektion der Fehler in analogen Signalbereich hat den Vorteil, dass Signalfehler in einer größeren Bandbreite detektiert werden können. Die Verwendung bei einer digitalen Logikeinheit ist wiederum positiv, da diese vergleichsweise einfach zu realisieren ist. Durch das Nachschalten einer digitalen Logikeinheit wird das Risiko eines "Fehlalarms" wesentlich verringert.

Falls die Logikeinheit zu dem Ergebnis kommt, dass tatsächlich ein Rauschen vorliegt, gibt diese ein entsprechendes Steuersignal an den digitalen Verstärker, der hierdurch im richtigen Moment mindestens soweit heruntergeregelt wird, so dass das Rauschen im Signalpfad vernachlässigt werden kann oder ganz unterdrückt ist.

Um sicherzustellen, dass das Steuersignal der digitalen Logikeinheit und das zugehörige Rauschen im Signalpfad gleichzeitig an dem digitalen Verstärker eintreffen, ist mit Vorteil vorgesehen, dass das Signal in dem Signalpfad verzögert wird. Hierzu kann es ausreichend sein, auf die üblichen Bestandteile in dem Signalpfad zurückzugreifen und diese entsprechend der benötigten Verzögerungszeit auszulegen. Gegebenenfalls muss ein zusätzliches Laufzeitglied oder ein Zwischenspeicher in den Signalpfad integriert werden.

In Ausgestaltung der Erfindung ist mit Vorteil vorgesehen, dass der analoge Rauschdetektor ein regelbarer Peak Detektor ist. Hierdurch wird ein adaptives Rauschunterdrückungssystem bereitgestellt. Der Rauschdetektor kann durch eine Rückkopplung mit der digitalen Logikeinheit kalibriert werden.

Es ist denkbar, alle möglichen, mit Hilfe des analogen Rauschdetektors ermittelten Informationen zur Überprüfung der als Rauschen detektierten Signalabschnitte mittels der digitalen Logikeinheit zu verwenden.

Beispielsweise kann der Algorithmus der digitalen Logikeinheit derart ausgestaltet sein, dass mehrere, von dem analogen Rauschdetektor detektierte, Signalabschnitte in einem bestimmten Zeitfenster gesammelt werden, und dass die digitale Logikeinheit steuernd auf den digitalen Verstärker einwirkt, wenn eine bestimmte Anzahl von detektierten Signalabschnitten in dem Zeitfenster auftreten.

Anhand der Zeichnung, die ein Ausführungsbeispiel der Erfindung zeigt, wird diese näher erläutert.

Die einzige Figur zeigt eine erfindungsgemäße Rauschunterdrückungsvorrichtung.

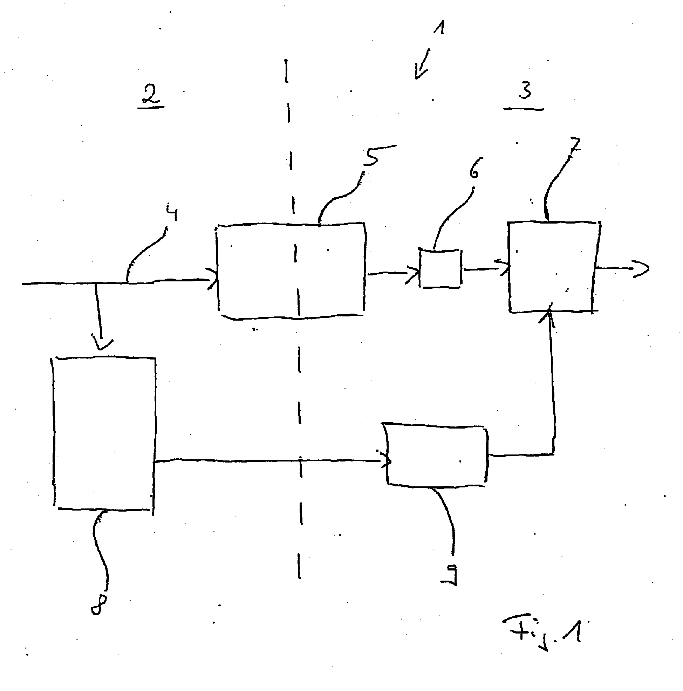

In Figur 1 ist schematisch eine Rauschunterdrückungsvorrichtung 1 dargestellt. Anhand der RauschunterdrückungsVorrichtung 1 wird das erfindungsgemäße Verfahren erläutert.

Die Rauschunterdrückungsvorrichtung 1 kann unterteilt werden in einen analogen Bereich 2 und einen digitalen Bereich 3. Die Vorrichtung 1 umfasst einen Signalpfad 4. In dem Signalpfad ist ein Analog/Digitalwandler 5, zur Umwandlung eines analogen Signals in ein digitales Signal, vorgesehen. Dem Analog/Digitalwandler ist ein zusätzliches Laufzeitglied 6 zur Verzögerung des Signals nachgeschaltet. Dem Laufzeitglied 6 wiederum ist ein digitaler Verstärker 7 nachgeordnet.

Weiterhin umfasst die Vorrichtung 1 einen analogen Rauschdetektor 8 zur Detektion eines Rauschens in dem analogen Signal im Signalpfad 4. Die von dem regelbaren, analogen Rauschdetektor 8 detektierten Signalabschnitte (Peaks) gehen in eine, dem analogen Rauschdetektor 8 nachgeschaltete, digitale Logikeinheit 9 ein. Mit Hilfe der digitalen Logikeinheit 9 wird überprüft, ob es sich bei den detektierten Signalabschnitten tatsächlich um ein Rauschen, also einen Signalfehler, handelt. Erkennt die digitale Logikeinheit 9 einen Signalfehler, so wirkt sie steuernd auf den digitalen Verstärker 7 im Signalpfad 4 ein.

Gemäß einem erfindungsgemäßen Algorithmus der digitalen Logikeinheit 9 sammelt die digitale Logikeinheit mehrere, von dem analogen Rauschdetektor 8 detektierte Signalabschnitte in einem bestimmten Zeitfenster. Übersteigt die Anzahl der detektierten Peaks in diesem Zeitfenster eine bestimmte Anzahl, so liegt ein Rauschen (Signalfehler) vor. Durch das Sammeln von mehreren Signalabschnitten in einem Zeitfenster wird der Signalfluss in dem digitalen Verstärker 9 verzögert. Damit nun ein bestimmter, detektierter Signalabschnitt im Signalpfad 4 gleichzeitig mit dem zugehörigen Steuersignal der Logikeinheit 9 beim digitalen Verstärker eintrifft, ist im Signalpfad 4 ein Laufzeitglied 6 vorgesehen. Durch das Steuersignal der Logikeinheit 9 wird der digitale Verstärker 7 im richtigen Moment in seiner Verstärkung so weit zurückgenommen, dass der fehlerhafte Signalabschnitt ausreichend abgeschwächt, also unterdrückt, wird.

### Bezugszeichenliste

- 1: Rauschunterdrückungsvorrichtung
- 2: Analoger Bereich
- 3: Digitaler Bereich
- 4: Signalpfad
- 5: Analog/Digitalwandler
- 6: Laufzeitglied
- 7: Digitaler Verstärker
- 8: Rauschdetektor
- 9: Logikeinheit

## Patentansprüche

1. Rauschunterdrückungsvorrichtung mit einem Signalpfad (4) und einem in dem Signalpfad (4) angeordneten Analog/Digitalwandler (5) zur Umwandlung eines analogen Signals in ein digitales Signale sowie einem, mit dem Signalpfad (4) verbundenen, analogen Störungsdetektor zur Detektierung eines Störsignals in dem analogen Signal, und mit einer dem analogen Störungsdetektor nachgeschalteten digitalen Logikeinheit (9), durch welche das digitale Signal beeinflussbar ist,
**dadurch gekennzeichnet, dass**
der Störungsdetektor ein analoger Rauschdetektor (8) ist, dass die digitale Logikeinheit (9) mehrere vom analogen Rauschdetektor (8) detektierte Signalabschnitte in einem vorgegebenen Zeitfenster sammelt, dass dem Analog/Digitalwandler (5) ein Verstärker (7) nachgeschaltet ist, und dass durch die digitale Logikeinheit (9) der digitale Verstärker (7) zur Unterdrückung eines Rauschens in dem digitalen Signal im Signalpfad (4) steuerbar ist, wenn eine vorgegebene Anzahl von detektierten Signalabschnitten in dem vorgegebenen Zeitfenster auftreten.

2. Rauschunterdrückungsvorrichtung nach Anspruch 1,
**dadurch gekennzeichnet, dass** mindestens ein zusätzliches Laufzeitglied (6)oder ein Zwischenspeicher zur Verzögerung des Signals in den Signalpfad (4) integriert ist.

3. Rauschunterdrückungsvorrichtung nach einem der vorhergehenden Ansprüche,
**dadurch gekennzeichnet, dass** die Bauteile (5, 6, 7) in dem Signalpfad derart ausgelegt sind, dass ein Rauschen in dem Signal gleichzeitig mit einem zugehörigen Steuersignal der digitalen Logikeinheit (9) am digitalen Verstärker (7) eintrifft.

4. Rauschunterdrückungsvorrichtung nach einem der vorhergehenden Ansprüche,
**dadurch gekennzeichnet, dass** der analoge Rauschdetektor (8) ein regelbarer Peak-Detektor ist.

5. Verfahren zur Unterdrückung eines Rauschens in einem Signal, wobei ein analoges Signal in einem Signalpfad (4) von einem Analog/Digitalwandler (5) in ein digitales Signal umgewandelt und das digitale Signal von einer digitalen Logikeinheit (9) geregelt wird, wenn eine Störung in dem analogen Signal mittels eines analogen Störungsdetektors detektiert wird,
**dadurch gekennzeichnet, dass** bei einem in einem detektierten Signalabschnitt detektierten Rauschen die Logikeinheit (9) steuernd auf einen digitalen Verstärker (7), dem das digitale Signal zugeführt wird, einwirkt, dass die digitale Logikeinheit (9) mehrere vom analogen Rauschdetektor (8) detektierte Signalabschnitte in einem vorgegebenen Zeitfenster sammelt und dass durch die digitale Logikeinheit (9) der digitale Verstärker (7) zur Unterdrückung eines Rauschens in dem digitalen Signal im Signalpfad (4) gesteuert wird, wenn eine vorgegebene Anzahl von detektierten Signalabschnitten in dem vorgegebenen Zeitfenster auftreten.

6. Verfahren nach Anspruch 5,
**dadurch gekennzeichnet, dass** der digitalen Verstärker (7) für die Dauer des Rauschen von der Logikeinheit (9) abgeschaltet wird.

7. Verfahren nach einem der vorhergehenden Verfahrensansprüche,
**dadurch gekennzeichnet, dass** das Signal in dem Signalpfad (4), vorzugsweise mittels eines zusätzlichen Laufzeitglieds (6) oder eines Zwischenspeichers, verzögert wird.

8. Verfahren nach einem der vorhergehenden Verfahrensansprüche,
**dadurch gekennzeichnet, dass** das Signal derart verzögert wird, dass ein Rauschen in dem Signal gleichzeitig mit einem zugehörigen Steuersignal der digitalen Logikeinheit (9) am digitalen Verstärker (7) eintrifft.

9. Verfahren nach einem der vorhergehenden Verfahrensansprüche,
**dadurch gekennzeichnet, dass** als analoger Rauschdetektor (8) ein insbesondere regelbarer Peak-Detektor verwendet wird.

## Claims

1. A noise suppression device, comprising a signal path (4) and an analogue/digital converter (5), disposed in the signal path (4), for converting an analogue signal into a digital signal, as well as an analogue interference detector connected to the signal path (4) for detecting an interfering signal in the analogue signal, and comprising a digital logic unit (9) connected after the analogue interference detector, by which the digital signal can be influenced,
for detecting noise in the analogue signal,
**characterised in that** the interference detector is an analogue noise detector (8),
**in that** the digital logic unit (9) collects several signal segments detected by the analogue noise detector (8) in a predetermined time window,
**in that** an amplifier (7) is connected after the analogue/digital converter (5),
and **in that** the digital logic unit (9) can control the digital amplifier (7) to suppress noise in the digital signal in the signal path (4) when a predetermined number of detected signal segments occurs in the predetermined time window.

2. A noise suppression device according to claim 1,
**characterised in that** at least one additional delay element (6) or an intermediate storage is integrated into the signal path (4) to delay the signal.

3. A noise suppression device according to one of the preceding claims,
**characterised in that** the components (5, 6, 7) in the signal path are configured such that a noise in the signal arrives at the digital amplifier (7) at the same time as an associated control signal of the digital logic unit (9).

4. A noise suppression device according to one of the preceding claims,
**characterised in that** the analogue noise detector (8) comprises a controllable peak detector.

5. A method for suppressing a noise in a signal, whereby an analogue signal in a signal path (4) is converted by an analogue/digital converter into a digital signal and the digital signal is regulated by a digital logic unit (8) when interference in the analogue signal is detected by means of an analogue interference detector,
**characterised in that** in the case of a noise detected in a detected signal segment, the logic unit (9) acts to control a digital amplifier (7) to which the digital signal is supplied,
**in that** the digital logic unit (9) collects several signal segments detected by the analogue noise detector (8) in a predetermined time window
and **in that** the digital amplifier (7) is controlled by the digital logic unit (9) to suppress a noise in the digital signal in the signal path (4) when a predetermined number of detected signal segments occurs in the predetermined time window.

6. A method according to claim 5,
**characterised in that** the digital amplifier (7) is switched off for the duration of the noise by the digital logic unit (9).

7. A method according to one of the preceding method claims,
**characterised in that** the signal in the signal path (4) is delayed, preferably by means of an additional delay element (6) or an intermediate storage.

8. A method according to one of the preceding method claims,
**characterised in that** the signal is delayed such that noise in the signal arrives at the digital amplifier (7) at the same time as an associated control signal of the digital logic unit (9).

9. A method according one of the preceding method claims,
**characterised in that** a peak detector, especially a controllable peak detector, is used as an analogue noise detector (8).

## Revendications

1. Dispositif de suppression de bruit comportant un chemin de signal (4) et un convertisseur analogique/numérique (5) installé dans le chemin de signal (4) pour convertir un signal analogique en un signal numérique ainsi qu'un détecteur analogique, de parasites, relié au chemin de signal (4) pour détecter un signal parasite dans le signal analogique et une unité logique (9) numérique, en aval du détecteur analogique de parasites, qui influence le signal numérique,
**caractérisé en ce que**
le détecteur de parasites est un détecteur analogique de bruit (8),
l'unité logique numérique (9) regroupe dans une fenêtre de temps prédéfinie, plusieurs segments de signal détectés par le détecteur analogique de bruit (8),
le convertisseur analogique/numérique (5) est suivi par un amplificateur (7) et
l'unité logique numérique (9) commande l'amplificateur numérique (7) pour supprimer un bruit dans le signal numérique du chemin de signal (4) si un nombre prédéfini de segments de signal détecté se produisent dans la fenêtre de temps prédéfinie.

2. Dispositif de suppression de bruit selon la revendication 1,
**caractérisé en ce qu'**
au moins un élément de temps de parcours (6) supplémentaire ou une mémoire intermédiaire pour retarder le signal sont intégrés dans le chemin de signal (4).

3. Dispositif de suppression de bruit selon l'une des revendications précédentes,
**caractérisé en ce que**
les composants (5, 6, 7) du chemin de signal sont conçus pour qu'un bruit contenu dans le signal arrive simultanément avec le signal de commande correspondant de l'unité logique numérique (9) dans l'amplificateur numérique (7).

4. Dispositif de suppression de bruit selon l'une des revendications précédentes,
**caractérisé en ce que**
le détecteur analogique de bruit (8) est un détecteur réglable de maximum.

5. Procédé de suppression d'un bruit dans un signal selon lequel un signal analogique d'un chemin de signal (4) est converti par un convertisseur analogique/numérique (5) en un signal numérique et le signal numérique est régulé par une unité logique numérique (9) si un parasite est détecté par un détecteur analogique de parasite dans le signal analogique,
**caractérisé en ce que**
lorsqu'un bruit est détecté dans le segment de signal détecté, l'unité logique (9) agit sur un amplificateur numérique (7) pour le commander, amplificateur qui reçoit le signal numérique,
l'unité logique numérique (9) collecte plusieurs segments de signal détectés par le détecteur analogique de bruit (8) dans une fenêtre de temps prédéfinie et
l'unité logique numérique (9) commande l'amplificateur numérique (7) pour supprimer le bruit dans le signal numérique du chemin de signal (4) si un nombre prédéfini de segments de signal détectés se produisent dans la fenêtre de temps prédéfinie.

6. Procédé selon la revendication 5,
**caractérisé en ce que**
l'amplificateur numérique (7) est coupé de l'unité logique (9) pour la durée du bruit.

7. Procédé selon l'une des revendications précédentes,
**caractérisé en ce que**
le signal du chemin de signal (4) est retardé de préférence par un élément de temps de parcours supplémentaire(6) ou une mémoire intermédiaire.

8. Procédé selon l'une des revendications de procédé précédentes,
**caractérisé en ce que**
le signal est retardé de façon qu'un bruit du signal arrive dans l'amplificateur numérique (7) simultanément avec un signal de commande correspondant de l'unité logique numérique (9) .

9. Procédé selon l'une des revendications précédentes,
**caractérisé en ce qu'**
on utilise comme détecteur analogique de bruit (8) notamment un détecteur de maximum, réglable.
